# FASCICULE DE BREVET EUROPEEN

(11) **EP 2 755 841 B1**
(45) Date de publication et mention de la délivrance du brevet: **25.11.2015**
(21) Numéro de dépôt: 12773025.7
(22) Date de dépôt: 12.09.2012
(51) Int. Cl.: B60K 11/04

(54) **AGENCEMENT DE REFROIDISSEMENT POUR UN VÉHICULE AUTOMOBILE**
KÜHLUNGSANORDNUNG FÜR EIN KRAFTFAHRZEUG
COOLING ARRANGEMENT FOR A MOTOR VEHICLE

(30) Priorité: 13.09.2011 FR 1158122
(43) Date de publication de la demande: 23.07.2014
(73) Titulaire: Renault S.A.S., 92100 Boulogne-Billancourt (FR)
(72) Inventeur: HELALI, Lounissi, F-93190 Livry Gargan (FR); BASSIN, Gilles, F-91200 Athis-Mons (FR); JANIER, Benoît, F-92370 Chaville (FR)
(86) Numéro de dépôt international: PCT/FR2012/052038
(87) Numéro de publication internationale: WO 2013/038106

(56) Documents cités:
- EP-A1- 0 128 878
- EP-A2- 0 890 811
- GB-A- 2 373 571
- US-A- 5 046 554
- US-A1- 2006 207 815

## Description

L'invention concerne un agencement de refroidissement pour un véhicule automobile.

L'invention concerne plus particulièrement un agencement de refroidissement pour un véhicule automobile comportant un moyen de support qui est destiné à être fixé à un élément de structure de caisse du véhicule, qui reçoit intérieurement au moins un organe de refroidissement, et sur lequel peuvent être fixés au moins deux organes supplémentaires de refroidissement.

On connaît de nombreux exemples d'agencements de refroidissement de ce type, voir par exemple le document US-A-5 046 554.

Il s'agit pour la plupart d'agencements dans lesquels un support porteur d'un radiateur du véhicule est aussi susceptible de porter différents accessoires tels qu'un ventilateur ou un condenseur d'un circuit de climatisation du véhicule. Un tel agencement permet de regrouper différentes fonctions mécaniques préalablement à leur montage sur le véhicule lors de son assemblage, et de les intégrer en une seule opération au véhicule.

Toutefois, un tel agencement ne permet qu'un assemblage univoque, spécifique à un type déterminé de véhicule.

L'invention remédie à cet inconvénient en proposant un agencement de refroidissement modulaire pouvant être adapté à différents types de véhicules, en fonction d'une part de leur configuration de montage et d'autre part de leurs besoins en accessoires.

Dans ce but, l'invention propose un agencement du type décrit précédemment,
caractérisé en ce que tous les organes de refroidissement sont reçus dans des cadres support associés similaires dont la réunion forme le moyen de support, chacun des cadres comportant des faces opposées qui comportent des moyens de fixation complémentaires de moyens de fixation des autres cadres, pour permettre l'assemblage des organes de refroidissement en empilant les cadres selon différents ordres d'empilement.

Selon d'autres caractéristiques de l'invention :
- chaque organe de refroidissement comporte au moins un premier moyen d'emboîtement interne complémentaire d'un second moyen d'emboîtement interne complémentaire porté par un bord intérieur du cadre associé ;
- un organe de refroidissement, notamment un condenseur associé à un circuit de climatisation, de forme sensiblement parallélépipédique, comporte :
   - un premier bord vertical comportant un axe vertical cylindrique d'articulation qui est reçu dans une gouttière cylindrique complémentaire formée dans un bord intérieur correspondant du cadre associé,
   - un second bord vertical opposé à partir duquel au moins un organe mâle faisant saillie, comportant le premier moyen d'emboîtement interne, qui est reçu avec jeu dans un logement du bord intérieur correspondant du cadre associé, ledit organe mâle étant susceptible d'être immobilisé dans le logement par l'intermédiaire d'au moins une patte flexible élastique s'étendant à partir d'un fond du logement parallèle au plan du cadre, qui forme le second moyen d'emboîtement interne ;
- l'organe mâle comporte un corps principal à partir duquel s'étendent deux ailettes parallèles au plan du cadre, une des ailettes comportant au moins une lumière qui est destinée à recevoir un pion de centrage complémentaire s'étendant à partir du fond du logement parallèle au plan du cadre, et l'ailette opposée, formant le premier moyen d'emboîtement interne, étant destinée à être immobilisée par un ergot, formant le second moyen d'emboîtement interne, qui est formé à l'extrémité d'une patte flexible élastique s'étendant à partir d'un fond du logement ;
- au moins un cadre comporte deux bords extérieurs plans opposés dont chacun comporte à chacune de ses extrémités :
   - une patte en forme de plaque plane flexible, qui s'étend dans le prolongement du bord extérieur plan suivant une direction perpendiculaire au plan du cadre en faisant saillie à partir d'une première face du cadre, et dont l'extrémité comporte un crochet,
   - une encoche parallélépipédique qui s'étend dans le bord extérieur plan dans l'alignement de la patte plane du cadre voisin et dans son alignement, d'une largeur correspondant à celle de la patte plane et d'une profondeur correspondant à celle de la patte plane, et qui débouche dans une seconde face opposée du cadre,
   - une patte élastique flexible recourbée qui fait saillie à partir du bord extérieur plan à proximité de la face avant du cadre, qui est recourbée au dessus de l'encoche et dont un crochet s'étend au moins en partie dans l'encoche, pour coopérer avec le crochet de la patte plane d'un autre cadre lorsque ladite patte est introduite dans l'encoche afin de l'immobiliser.

D'autres caractéristiques et avantages de l'invention apparaîtront à la lecture de la description détaillée qui suit pour la compréhension de laquelle on se reportera aux dessins annexés dans lesquels :
- les figures 1A et 1B sont des vues en perspective illustrant le montage d'un organe de refroidissement dans un cadre ;
- la figure 2 est une vue de détail illustrant les premier et second moyens d'emboîtements internes ;
- les figures 3A et 3B sont des vues en perspective illustrant deux empilements possibles de cadres porteurs d'organes de refroidissement ;
- les figures 4A et 4B sont des vues de détail en coupe associées respectivement aux empilements des figures 3A et 3B.

Dans la description qui va suivre, des chiffres de référence identiques désignent des pièces identiques ou ayant des fonctions similaires.

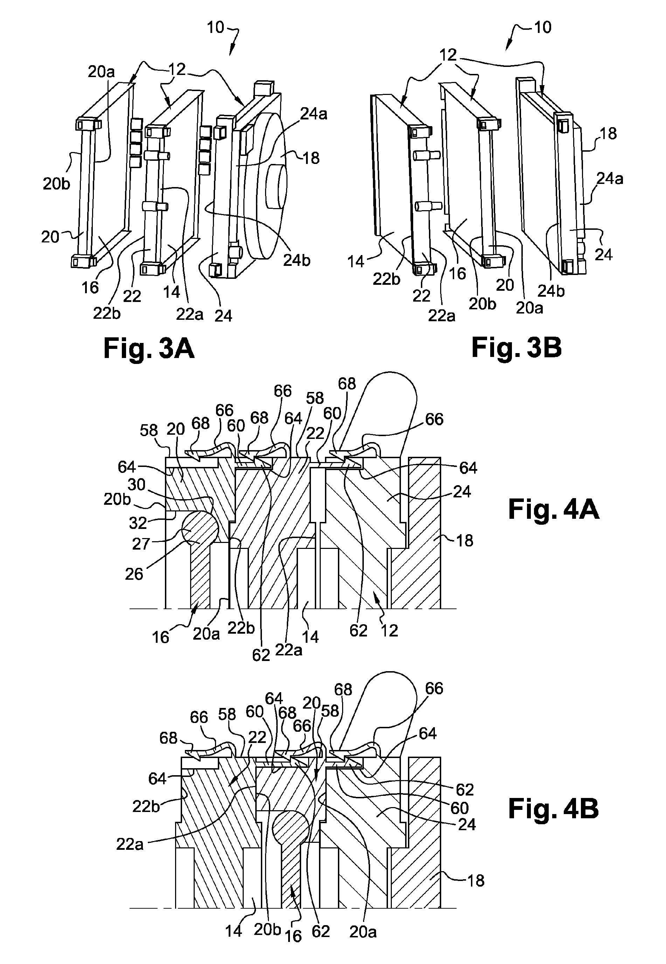

On a représenté à la figure 3A un agencement 10 de refroidissement pour un véhicule automobile.

Dans un agencement conventionnel, un tel agencement 10 comporte un moyen 12 de support qui est destiné à être fixé à un élément de structure de caisse (non représenté) du véhicule.

Ainsi, comme l'illustrent les figures 3A et 3B, le moyen 12 reçoit intérieurement au moins un organe de refroidissement, par exemple un condenseur 16. Sur ce moyen 12 sont fixés deux organes supplémentaires de refroidissement, par exemple un radiateur 14 et un ventilateur 18 de refroidissement, comme l'illustrent les figures 3A et 3B.

Conformément à l'invention, le moyen 12 de support est constitué de l'assemblage de cadres 20, 22, 24 de support associés à chacun des organes 14, 16, 18 de refroidissement.

Ainsi, tous les organes 14, 16, 18 de refroidissement sont reçus dans des cadres 20, 22, 24 de support associés similaires, dont la réunion forme le moyen de support 12, dont les faces opposées 20a, 20b, 22a, 22b, 24a, 24b de chacun comportent des moyens de fixation complémentaires de moyens de fixation des autres cadres 20, 22, 24, pour permettre l'assemblage des organes 14, 16, 18 de refroidissement en empilant les cadres 20, 22, 24 selon différents ordres d'empilement.

Cette configuration a été représentée à titre d'exemple sur les figures 3A et 3B.

Sur la figure 3A, les cadres 20, 22, 24 sont empilés de manière à agencer successivement le condenseur 16, le radiateur 14, et le ventilateur 18. Sur la figure 3B, les cadres 22, 20, 24 sont empilés de manière à agencer successivement le radiateur 14, le condenseur 16, et le ventilateur 18.

Ces deux configurations ne sont pas limitatives de l'invention, et il pourrait être envisagé d'autres combinaisons, notamment avec un nombre supérieur de cadres et d'organes associés.

Dans le mode de réalisation préféré de l'invention, chaque organe 14, 16, 18 de refroidissement comporte au moins un premier moyen d'emboîtement interne complémentaire d'un second moyen d'emboîtement interne complémentaire porté par un bord intérieur du cadre 20, 22, 24 associé.

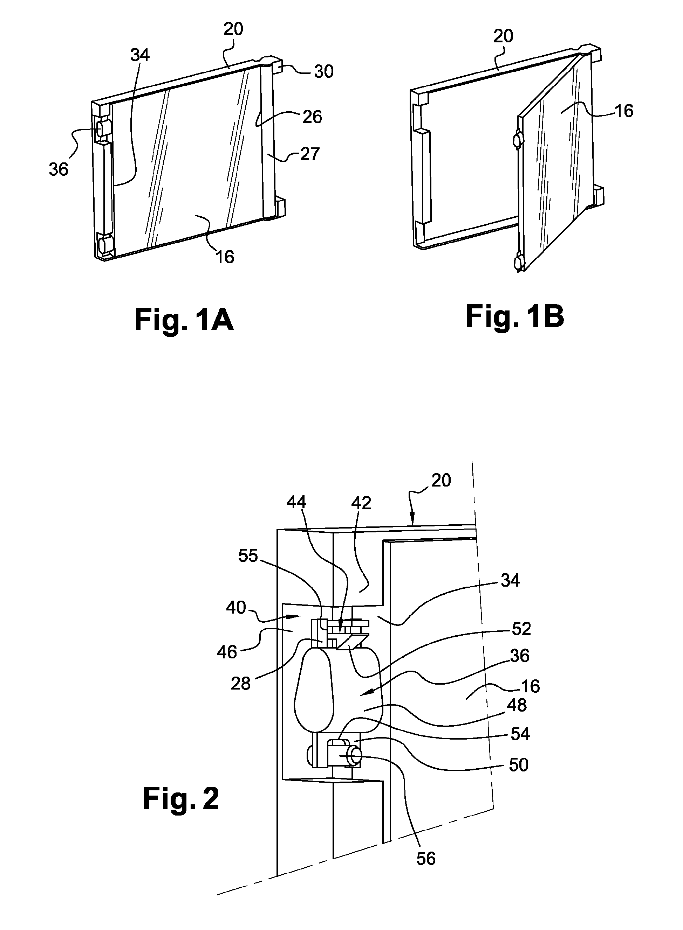

Une telle configuration a été représentée à titre d'exemple aux figures 1A et 1B de manière non limitative de l'invention en relation avec le montage du condenseur 16 dans son cadre 20.

Ainsi le condenseur 16, associé à un circuit de climatisation (non représenté), est de forme sensiblement parallélépipédique, et il comporte :
- un premier bord vertical 26 comportant un axe vertical 27 cylindrique d'articulation qui est reçu dans une gouttière cylindrique 30 complémentaire formée dans un bord intérieur 32 correspondant du cadre 20 associé, comme représenté aux figures 1A et 4A,
- un second bord vertical 34 opposé à partir duquel au moins un organe mâle 36 faisant saillie, comportant le premier moyen d'emboîtement interne, est reçu avec jeu dans un logement 40 du bord intérieur 42 correspondant du cadre 20 associé, comme représenté aux figures 1A et 2.

Plus particulièrement, un corps principal 48 de l'organe mâle 36, formant le premier moyen d'emboîtement interne est susceptible d'être immobilisé dans le logement 40 par l'intermédiaire d'au moins une patte flexible 44 élastique s'étendant à partir d'un fond 46 du logement 40 parallèle au plan du cadre 20, et qui comporte le second moyen d'emboîtement interne.

Plus particulièrement, comme l'illustre la figure 2, l'organe mâle 36 comporte un corps principal 48 à partir duquel s'étendent deux ailes 50 et 28 parallèles au plan du cadre 20. Une aile 50 comporte au moins une lumière 54 est destinée à recevoir un pion de centrage 56 complémentaire s'étendant à partir du fond 46 du logement 40 parallèle au plan du cadre 20, et l'aile opposée 28 comporte une lumière 55 recevant la patte flexible 44 destinée à immobiliser le corps 48 de l'organe mâle 36. La patte flexible 44 comporte un ergot 52, formant le second moyen d'emboîtement interne, qui est formé à l'extrémité de la patte flexible 44 élastique s'étendant à partir du fond 46 du logement 40.

L'invention permet de cette manière l'immobilisation de tout organe 14, 16, 18 de refroidissement dans l'un des cadres 20, 22, 24.

Par ailleurs, comme l'illustrent les figures 4A et 4B, chaque cadre 20, 22, comporte deux bords 58 extérieurs, plans, opposés comportant chacun, à chacune de leurs extrémités, une patte 60 en forme de plaque plane flexible, qui s'étend dans le prolongement du bord 58 extérieur plan suivant une direction perpendiculaire au plan du cadre 20, 22 en faisant saillie à partir d'une première face 20a, 22a du cadre, et dont l'extrémité comporte un crochet 62.

Par ailleurs chaque cadre 20, 22, 24 comporte deux bords 58 extérieurs plans opposés comportant chacun, à chacune de leurs extrémités une encoche parallélépipédique 64 qui s'étend dans le bord extérieur plan 58 dans l'alignement de la patte plane 60 du cadre voisin et dans son alignement.

L'encoche 64 s'étend sensiblement à l'opposé de la patte plane 60 du même cadre 20, 22 lorsque ledit cadre en est pourvu, et est d'une largeur correspondant à celle de la patte plane 60 et d'une profondeur correspondant à celle de la patte plane 60, et qui débouche dans une seconde face 20b, 22b, 24b opposée du cadre.

Chaque cadre 20, 22, 24 comporte enfin une patte élastique flexible recourbée 66 qui fait saillie à partir du bord extérieur plan 58 à proximité de la face avant 20a, 22a, 24a du cadre, qui est recourbée au dessus de l'encoche 64 et dont un crochet 68 s'étend au moins en partie dans l'encoche 64, pour coopérer avec le crochet 62 de la patte plane 60 d'un autre cadre lorsque ladite patte plane 60 est introduite dans l'encoche 64 afin de l'immobiliser.

Ainsi l'encoche 64 est destinée à recevoir une patte plane 60 qui est destinée à être immobilisée par la patte élastique flexible recourbée 66.

Cette configuration permet de verrouiller l'un des cadres 20, 22, 24 sur l'un des autres cadres 20, 22 et donc de créer un empilement de cadres.

L'invention propose ainsi un agencement de refroidissement pour un véhicule automobile permettant de monter des organes de refroidissement de manière modulaire et flexible.

## Revendications

1. Agencement (10) de refroidissement pour un véhicule automobile comportant un moyen (12) de support qui est destiné à être fixé à un élément de structure de caisse du véhicule, qui reçoit intérieurement au moins un organe (16) de refroidissement, et sur lequel peuvent être fixés au moins deux organes supplémentaires (14, 18) de refroidissement,
**caractérisé en ce que** tous les organes (14, 16, 18) de refroidissement sont reçus dans des cadres (20, 22, 24) de support associés similaires dont la réunion forme le moyen (12) de support, chacun des cadres (20, 22, 24) comportant des faces opposées (20a, 20b, 22a, 22b, 24a, 24b) qui comportent des moyens de fixation complémentaires de moyens de fixation des autres cadres (20, 22, 24), pour permettre l'assemblage des organes (14, 16, 18) de refroidissement en empilant les cadres (20, 22, 24) selon différents ordres d'empilement.

2. Agencement (10) selon la revendication 1, **caractérisé en ce que** chaque organe (14, 16, 18) de refroidissement comporte au moins un premier moyen d'emboîtement interne (28) complémentaire d'un second moyen d'emboîtement interne (52) complémentaire porté par un bord intérieur (32) du cadre (20) associé.

3. Agencement (10) selon la revendication précédente, **caractérisé en ce qu'**un organe de refroidissement, notamment un condenseur (16) associé à un circuit de climatisation, de forme sensiblement parallélépipédique, comporte :
- un premier bord vertical (26) comportant un axe vertical (28) cylindrique d'articulation qui est reçu dans une gouttière cylindrique complémentaire (30) formée dans un bord intérieur (32) correspondant du cadre (20) associé,
- un second bord vertical (34) opposé à partir duquel au moins un organe mâle (36) faisant saillie, comportant le premier moyen (28) d'emboîtement interne, est reçu avec jeu dans un logement (40) du bord intérieur (42) correspondant du cadre (20) associé, ledit organe mâle (36) étant susceptible d'être immobilisé dans le logement (40) par l'intermédiaire d'au moins une patte flexible (44) élastique s'étendant à partir d'un fond (46) du logement (40) parallèle au plan du cadre (20), qui comporte le second moyen d'emboîtement interne.

4. Agencement (10) selon la revendication précédente, **caractérisé en ce que** l'organe mâle (36) comporte un corps principal (48) à partir duquel s'étendent deux ailettes (50, 28) parallèles au plan du cadre (20), une des ailettes (50) comportant au moins une lumière (54) qui est destinée à recevoir un pion (56) de centrage complémentaire s'étendant à partir du fond (46) du logement (40) parallèle au plan du cadre (20), et l'ailette opposée (28), formant le premier moyen d'emboîtement interne, étant destinée à être immobilisée par un ergot (52), formant le second moyen d'emboîtement interne, qui est formé à l'extrémité d'une patte flexible (44) élastique s'étendant à partir d'un fond (46) du logement (40).

5. Agencement (10) selon l'une des revendications précédentes, **caractérisé en ce qu'**au moins un cadre (20, 22, 24) comporte deux bords extérieurs plans opposés (58) dont chacun comporte à chacune de ses extrémités :
- une patte (60) en forme de plaque plane flexible, qui s'étend dans le prolongement du bord extérieur plan (58) suivant une direction perpendiculaire au plan du cadre (20, 22) en faisant saillie à partir d'une première face (20a, 22a) du cadre (20, 22), et dont l'extrémité comporte un crochet (62),
- une encoche parallélépipédique (64) qui s'étend dans le bord extérieur plan (58) dans l'alignement de la patte plane (60) du cadre voisin et dans son alignement, d'une largeur correspondant à celle de la patte plane (60) et d'une profondeur correspondant à celle de la patte plane (60), et qui débouche dans une seconde face (20b, 22b, 24b) opposée du cadre,
- une patte élastique flexible recourbée (66) qui fait saillie à partir du bord extérieur plan (58) à proximité de la face avant (20a, 22a, 22a) du cadre, qui est recourbée au dessus de l'encoche (64) et dont un crochet (68) s'étend au moins en partie dans l'encoche (64), pour coopérer avec le crochet (62) de la patte plane (60) d'un autre cadre lorsque ladite patte (60) est introduite dans l'encoche (64) afin de l'immobiliser.

## Patentansprüche

1. Kühlungsanordnung (10) für ein Kraftfahrzeug, umfassend ein Stützmittel (12), das dazu bestimmt ist, an einem Strukturelement der Fahrzeugkarosserie befestigt zu werden, das innen mindestens ein Kühlungselement (16) aufnimmt, und auf dem mindestens zwei zusätzliche Kühlungselemente (14, 18) befestigt werden können,
**dadurch gekennzeichnet, dass** alle Kühlungselemente (14, 16, 18) in ähnlichen zugehörigen Stützrahmen (20, 22, 24) aufgenommen sind, deren Verbindung das Stützmittel (12) bildet, wobei jeder der Rahmen (20, 22, 24) gegenüberliegende Flächen (20a, 20b, 22a, 22b, 24a, 24b) umfasst, die komplementäre Befestigungsmittel zu den Befestigungsmitteln der anderen Rahmen (20, 22, 24) umfassen, um den Zusammenbau der Kühlungselemente (14, 16, 18) zu ermöglichen, wobei die Rahmen (20, 22, 24) in verschiedenen Stapelreihenfolgen gestapelt werden.

2. Anordnung (10) nach Anspruch 1, **dadurch gekennzeichnet, dass** jedes Kühlungselement (14, 16, 18) mindestens ein erstes inneres Passmittel (28) komplementär zu einem komplementären zweiten inneren Passmittel (52), das von einem Innenrand (32) des zugehörigen Rahmens (20) getragen wird, umfasst.

3. Anordnung (10) nach dem vorhergehenden Anspruch, **dadurch gekennzeichnet, dass** ein Kühlungselement, insbesondere ein Kondensator (16), der einer Klimaschaltung zugeordnet ist, von im Wesentlichen parallelflacher Form Folgendes umfasst:
- einen ersten vertikalen Rand (26), umfassend eine zylindrische vertikale Gelenkachse (28), die in einer komplementären zylindrischen Rinne (30) aufgenommen ist, die in einem entsprechenden Innenrand (32) des zugehörigen Rahmens (20) ausgebildet ist,
- einen zweiten vertikalen Rand (34), gegenüber welchem mindestens ein vorspringendes Einsteckelement (36), umfassend das erste innere Passmittel (28), mit Spiel in einer Lagerung (40) des entsprechenden Innenrandes (42) des zugehörigen Rahmens (20) aufgenommen ist, wobei das Einsteckelement (36) geeignet ist, in der Lagerung (40) mit Hilfe mindestens einer elastischen biegsamen Lasche (44) festgestellt zu werden, die sich von einem Boden (46) der Lagerung (40) parallel zur Ebene des Rahmens (20) erstreckt, der das zweite innere Passmittel umfasst.

4. Anordnung (10) nach dem vorhergehenden Anspruch, **dadurch gekennzeichnet, dass** das Einsteckelement (36) einen Hauptkörper (48) umfasst, von dem aus sich zwei Flügel (50, 28) parallel zur Ebene des Rahmens (20) erstrecken, wobei einer der Flügel (50) mindestens eine Öffnung (54) umfasst, die dazu bestimmt ist, einen komplementären Zentrierstift (56) aufzunehmen, der sich vom Boden (46) der Lagerung (40) parallel zur Ebene des Rahmens (20) erstreckt, und wobei der gegenüberliegende Flügel (28), der das erste innere Passmittel bildet, dazu bestimmt ist, durch einen Haken (52) festgestellt zu werden, der das zweite innere Passmittel bildet, das am Ende einer elastischen biegsamen Lasche (44) ausgebildet ist, die sich von einem Boden (46) der Lagerung (40) aus erstreckt.

5. Anordnung (10) nach einem der vorhergehenden Ansprüche, **dadurch gekennzeichnet, dass** mindestens ein Rahmen (20, 22, 24) zwei gegenüberliegende flache Außenränder (58) umfasst, von denen jeder an jedem seiner Enden Folgendes umfasst:
- eine Lasche (60) in Form einer biegsamen flachen Platte, die sich in der Verlängerung des flachen Außenrandes (58) in eine Richtung senkrecht auf die Ebene des Rahmens (20, 22) erstreckt, wobei sie aus einer ersten Fläche (20a, 22a) des Rahmens (20, 22) vorspringt, und deren Ende einen Haken (62) umfasst,
- eine parallelflache Kerbe (64), die sich im flachen Außenrand (58) in der Ausrichtung der flachen Lasche (60) des benachbarten Rahmens und in seiner Ausrichtung erstreckt, mit einer Breite entsprechend jener der flachen Lasche (60) und einer Tiefe entsprechend jener der flachen Lasche (60), und die in eine zweite gegenüberliegende Fläche (20b, 22b, 24b) des Rahmens mündet,
- eine gekrümmte biegsame elastische Lasche (66), die aus dem flachen Außenrand (58) in der Nähe der Vorderseite (20a, 22a, 24a) des Rahmens vorspringt, die über der Kerbe (64) gekrümmt ist und deren Haken (68) sich zumindest teilweise in der Kerbe (64) erstreckt, um mit dem Haken (62) der flachen Lasche (60) eines weiteren Rahmens zusammenzuwirken, wenn die Lasche (60) in die Kerbe (64) eingeführt wird, um sie festzustellen.

## Claims

1. Cooling arrangement (10) for an automotive vehicle, comprising a mounting means (12) which is intended to be fixed to a structural element of the vehicle bodyshell, which internally houses at least one cooling member (16) and to which at least two additional cooling members (14, 18) can be fixed,
**characterized in that** all the cooling members (14, 16, 18) are housed in similar associated mounting frames (20, 22, 24) which when joined together form the mounting means (12), each of the frames (20, 22, 24) comprising opposite faces (20a, 20b, 22a, 22b, 24a, 24b) which comprise fixing means that complement fixing means belonging to the other frames (20, 22, 24) to allow the cooling members (14, 16, 18) to be assembled by stacking the frames (20, 22, 24) in different orders of stacking.

2. Arrangement (10) according to Claim 1, **characterized in that** each cooling member (14, 16, 18) comprises at least one first internal socket-jointing means (28) that complements a complementary second internal socket-jointing means (52) carried by an interior edge (32) of the associated frame (20).

3. Arrangement (10) according to the preceding claim, **characterized in that** one cooling member, notably a condenser (16) associated with an air conditioning circuit, of substantially parallelepipidal shape, comprises:
- a first vertical edge (26) having a cylindrical vertical axis (28) of articulation which is housed in a complementary cylindrical trough (30) formed in a corresponding interior edge (32) of the associated frame (20),
- an opposite second vertical edge (34) from which at least one projecting male member (36), comprising the first internal socket-jointing means (28) is housed with clearance in the housing (40) of the corresponding interior edge (42) of the associated frame (20), the said male member (36) being able to be immobilized in a housing (40) through the agency of at least one elastic flexible tab (44) extending from a base (46) of the housing (40) parallel to the plane of the frame (20), which comprises the second internal socket-jointing means.

4. Arrangement (10) according to the preceding claim, **characterized in that** the male member (36) comprises a main body (48) from which there extend two fins (50, 28) parallel to the plane of the frame (20), one of the fins (50) comprising at least one aperture (54) which is intended to house a complementary centring peg (56) extending from the base (46) of the housing (40) parallel to the plane of the frame (20), and the opposite fin (28), forming the first internal socket-jointing means, being intended to be immobilized by a lug (52), forming the second internal socket-jointing means, which is formed at the end of an elastic flexible tab (44) extending from a base (46) of the housing (40).

5. Arrangement (10) according to one of the preceding claims, **characterized in that** at least one frame (20, 22, 24) comprises two opposite planar exterior edges (58), each of which comprises, at each of its ends:
- a tab (60) in the form of a flexible planar plate, which extends in the extension of the planar exterior edge (58) in a direction perpendicular to the plane of the frame (20, 22), projecting out from a first face (20a, 22a) of the frame (20, 22), and the end of which has a hook (62),
- a parallelepipidal notch (64) which extends in the planar exterior edge (58) in alignment with the planar tab (60) of the adjacent frame and in alignment therewith, of a width corresponding to that of the planar tab (60) and of a depth corresponding to that of the planar tab (60), and which opens into an opposite second face (20b, 22b, 24b) of the frame,
- a bent flexible elastic tab (66) which projects out from the planar exterior edge (58) in the vicinity of the front face (20a, 22a, 22a) of the frame, which is bent over the top of the notch (64) and of which a hook (68) extends at least partially into the notch (64) to engage with the hook (62) of the planar tab (60) of another frame when the said tab (60) is inserted into the notch (64) in order to immobilize it.
